# EUROPEAN PATENT APPLICATION

(11) **EP 1 681 314 A1**
(43) Date of publication of application: **19.07.2006**
(21) Application number: 05000523.0
(22) Date of filing: 12.01.2005
(51) Int. Cl.: C08K 3/34, C08L 23/12, C08K 9/08, C08K 7/00

(54) **Nanocomposite with improved physical properties**

(71) Applicant: Borealis Technology Oy, 06101 Porvoo (FI)
(72) Inventor: Motha, Kshama, 00980 Helsinki (FI); Malm, Bo, 02110 Espoo (FI)
(74) Representative: Kador & Partner

(57) **Abstract**

The present invention relates to nanocomposites with improved flame retardancy, comprisising a polymer matrix, a nano-filler, a wax and a compatibilizer.

## Description

The present invention relates to novel nanocomposites with improved flame retardancy, improved mechanical properties and improved barrier properties. Additionally, the present invention relates to the use of a nanocomposite for the production of moulded and extruded articles based on a nanocomposite according to the invention as well as to moulded and extruded articles comprising the inventive nanocomposite. Moreover, the invention is related to a process for producing such a nanocomposite.

Typically, inorganic materials such as talc, mica, clay etc. are used to improve mechanical properties of polymers. Conventionally, the incorporation of such inorganic materials into a polymer influences in a positive manner the mechanical properties, such as mechanical strength and stiffness, temperature resistance, flame retardancy and barrier properties. Conventional mechanical incorporation frequently results in poor dispersions, in which particles of the inorganic materials form multi-layer aggregates because they are incompatible with the polymer matrix. Various attempts have been made to improve the dispersability of inorganic materials in a polymer matrix. From these attempts it is known that organic substances such as monomers or polymers cannot fully penetrate the entire space of inorganic layered materials. Moreover, the layers of inorganic materials cannot be uniformly dispersed in polymer matrices without creating a surface of inorganic materials with organophilic materials. As a consequence thereof, in melt compounding, a third component, such as a functionalised polymer compatible with the layer, is used to improve the delamination of the layers. However, the improvement of properties is still not significantly superior to that to conventional micro fillers.

The term "nanocomposite" describes a multiphase material where the phase is dispersed in one or more other phases at a nanometer level. To obtain such nanocomposites, of course, the filler particles must be "nanofillers". Nanofillers are substances as described above with the ability to disperse in the matrix polymer in such a way that structures in the nanoscale (1-700 nm) are obtained.

From WO 93/04117 a polymeric nanocomposite is known comprising a continuous polymeric phase formed from a melt processable polymer and platelet particles whereby the particles have been treated with swelling/compatibilising agents each having a distinct bond interaction with both the polymer and the platelet particle. However, such particles are not sufficient to reach an exfoliation of the used clays. Such exfoliation, is however, important to improve a high degree of compatibilisation which automatically leads to good mechanical properties.

US 6,034,163 discloses a polyester composite material comprising a swellable layered silicate clay such as montmorillonite and a further expanding agent. This expanding agent has been used to preswell the organo-clay. Such an employment increases the basal spacing of the organo-clay through the introduction of the expanding agent into the galleries. However, again, a total exfoliation of the clay cannot be achieved. Thus, the limitation of the mechanical properties is given by the swelling of the clay but no exfoliation is achieved, which might improve the properties.

WO 02/02682 also discloses nanocomposites consisting of a modified polypropylene with functional groups containing monomers having a highly polar structure and an organic layered clay material. The layer clay mineral is converted into an organic mineral by organic onium ions. Again, such a composition will lead to a better intercalation but will not automatically lead to an exfoliation which would give a nanocomposite where the dispersity of the layered material might further improve.

It is therefore an object of the present invention to provide a nanocomposite which has good mechanical properties, i.e. good mechanical strength and stiffness and improved barrier properties, e.g. reduction in oxygen permeation and water vapour permeability.

The present invention is based on the finding that this object can be addressed by a polymer composition which comprises an exfoliated or mostly exfoliated layer material.

The present invention provides therefore a nanocomposite comprising
(A) a polymer matrix,
(B) a nanofiller,
(C) a wax, and
(D) a polymeric compatibilizer.

The inventive composition shows very good properties especially good barrier properties with respect to oxygen and water vapour permeation and good mechanical properties. This positive effect is achieved by using wax which surprisingly increases, at low shear rates, the melt viscosity. Conventionally, wax is used to decrease the melt viscosity for a better blending. However, in the present case, it has been surprisingly found out that at low shear rates an increase of melt viscosity is effectuated. Such low melt viscosity is a strong indication of the exfoliation of the layer particles. In turn, exfoliated layered particles are the activators for the good mechanical properties through to the good dispersion which can be achieved by layered fillers in nanodimensions. Table 1 illustrates the observed effect that the inventive polymer composition shows increasing melt viscosity at low shear rates in comparison to nanocomposites without wax.

Any suitable polymer matrix (A) may be used.

The choice and the composition of the polymer matrix (A) is various, depending on for what purpose the inventive composition is used. Of course, polymer matrix (A) may also comprise a mixture of different polymers.

Preferably, the polymer matrix (A) comprises polyolefins, more preferably the polymer matrix (A) consists of polyolefins.

Matrix polymer (A) preferably is a polyolefin or any combination of polyolefins, such as high density polyethylene, medium density polyethylene, linear low density polyethylene, low density polyethylene, terpolymers of polyethylene with one or more alpha-olefins, polypropylene homopolymer, propylene-ethylene random copolymer, high impact propylene copolymer or polypropylene terpolymer with ethylene and other alpha-olefins.

It is preferred that the polymer matrix (A) is thermoplastic.

Preferably, the polymer matrix (A) is an olefin homo- and/or copolymer.

However the polymer matrix (A) can also comprise other homo- and/or copolymers than polyolefin homo- and/or copolymers, but it is preferred that only polyolefin homo- and/or copolymers are present in the polymer matrix (A). More preferably, the polymer matrix (A) is an ethylene and/or propylene homo- or copolymer, still more preferably an ethylene or propylene homo- or copolymer, and most preferably the polymer matrix (A) is a propylene homo- and/or copolymer. The copolymer consists preferably of at least two different olefins. Further on, it is preferred that the polyolefin, more preferably the homopolymer, is a polyethylene or a polypropylene and more preferred polypropylene. Where the polyolefine is a copolymer, the olefines are preferably C₂ to C₂₀ α-olefines, more preferably ethylene, propylene, butene-1, heptene-1, hexene-1, 4-methylpentene and octene-1. It is preferred that the polymer matrix (A) is a copolymer comprising at least two different components selected from the group consisting of ethylene, propylene, butene-1, heptene-1, hexene-1 and 4-methylpentene. However, polar comonomers such as acrylates may be used. Moreover, the polymer matrix (A) is not limited to the above-mentioned polymers but also elastomeric polymers may be used such as for example ethylene/propylene rubber (EPR).

The nanocomposite comprises preferably 50 to 98 wt.%, more preferably 70 to 90 wt.% and most preferably 75 to 85 wt.% of the polymer matrix (A).

Furthermore, the inventive composition comprises a nano-filler (B). The expression "nano-filler" as used herein refers to substances with the ability to disperse in the polymer matrix in such a way that structures in the nanoscale dimension (1-700 nm) are observed. Usually, the particles of the nano-filler (B) are dispersed in the polymer matrix so that the maximum thickness in at least one dimension is 400 nm or less, more preferably 200 nm or less and most preferably less than 100 nm. It is in particular preferred that each of the dimension of the nanofiller is 400 nm or less, more preferably 200 nm or less and most preferably less than 100 nm.

Polymer matrices in which a nano-filler (B) is dispersed as described above are usually designated as nanocomposites. Thus, this term designates a multiphase material where one phase, i.e. the nano-filler (B), is dispersed in one or more other phases at a nanometer level in such a way that structures in the nanoscaled dimension (1-700nm) are observed.

In the present invention, as nano-fillers (B), all layered materials but also nanowhiskers and nanotubes may be used as long as they have the ability to disperse the polymer matrix (A) to form a nanocomposite. The nano-filler may either be a clay-based compound or a submicron filler such as talc, calcium carbonate or mica, which usually have been treated, for instance, by grinding to obtain particles of small, i.e. sub-micron, dimensions.

By "clay-based compounds" any organic or inorganic material is denoted which is having a structure on the nanoscopic scale of a plurality of adjacent layers. A "sub-micron filler" is any organic or inorganic material which is present in small particles of sub-micron (10⁻⁶ m) particle size.

Preferably, nanofiller (B) is of inorganic nature.

It is preferred that the nano-fillers (B) are layered silicate materials, silica nanowhiskers, and carbon nanotubes still more preferred the nano-filler (B) is a clay-based compound. Clay-based compounds upon compounding of the polymer mixture are dispersed in polymer matrix (A) so that individual platelets in the layered structure are separated or delaminated. As a consequence, the surface area of the clay in contact with the polymer is several magnitudes higher than that with conventional reinforcement fillers.

In a further preferred embodiment, nanofiller (B) is a clay-based layered inorganic, preferably silicate, material or material mixture. Such useful clay materials include natural, synthetic and modified phyllosilicates. Natural clays include smectite clays, such as montmorillonite, hectorite, mica, vermiculate, bentonite. Synthetic clays include synthetic mica, synthetic saponite, synthetic hectorite. Modified clays include fluoronated montmorillonite, fluoronated mica.

Of course, nanofiller (B) may also components comprising a mixture of different nano-fillers such as mixtures of a clay-based nano-filler and talc.

The dispersion of the above-mentioned layered materials used as nanofillers (B) in the polymer matrix is caused by the delamination or exfoliation of the layers of these materials.

Layered silicates may be made organophilic before being dispersed in the polymer matrix (A) by chemical modification such as by cation exchange treatment using alkyl ammonium or phosphonium cation complexes. Such cation complexes intercalate between the clay layers.

Preferably, a smectite type clay is used which comprises montmorinollite, beidellite, nontronite, saponite, as well as hectonite. The most preferred smectite type clay is montmorinollite.

It is preferred that the amount of nano-filler (B) is 1 to 20 wt.%, more preferred 2 to 15 wt.%, and most preferred 2 to 10 wt.%, based on the total weight of the composition.

Furthermore, the inventive composition comprises a wax (C).

The expression "wax" refers to and includes natural or synthetic substances, which show the following properties:
- varying in consistency from soft and plastic to brittle and hard;
- solid at ambient temperature, coarse to finally crystalline, transparent to opaque but not glasslike;
- relatively low viscosity slightly above the melting point;
- liquid at 43-105°C;
- consistency and solubility are highly temperature dependent;
- insoluble in water;
- can form pastes and gels when dispersed in solvents; and
- combustible.

Waxes can be natural or synthetic products. Waxes can be classified into natural waxes, mineral waxes, hydrocarbon waxes, petroleum waxes and synthetic waxes (including also Fischer-Tropsch-waxes). Said natural waxes can be of vegetable or animal origin. The predominant wax of the animal origin is bees-wax. The most important representatives of vegetable origin are carnauba and candelilla. Mineral hydrocarbon waxes are for example montan wax derived by solvent extraction of lignite. Montan waxes are derived from the oxidative refining of crude wax and subsequently are esterfied with glycol and inorganic materials (e.g. calcium hydroxide). Their viscosity varies in the range of 25-250 MPaxs (at 100°C). Petroleum waxes are hydrocarbons derived from petroleum. There are different main types such as slack wax which is an unextracted wax derived from dewaxing base distillate lub oil streams, paraffin which is deoiled slack wax consisting predominantly of straight chain alkenes, microcrystalline which is a branched and cyclic alkene form deoiling residual bright stock lube oil stream, and petrolatum which is a bright stock deoiled residual lube oil or blends of oils and waxes. Lastly, the synthetic waxes are polyolefin waxes and Fischer-Tropsch-wax. Waxes are also compatible with polar as well as with non-polar polymers. In the present invention, synthetic waxes are preferred, more preferably Fischer-Tropsch-waxes and synthetic paraffin waxes (straight chain waxes). The linear structure waxes may be derived from petroleum waxes to polyethylene/polypropylene waxes. The polyethylene and polypropylene waxes have a viscosity (at 100°C) in the range of 300 to 1500 MPaxs. The wax may also be polar such as copolymers ethylene-vinylacetate-waxes, post-reactor chemically modified waxes or substituted amid waxes. The Fischer-Tropsch-waxes are typified by low viscosity (10cp at 130°C) and low surface tension (22dyne/cm). They are linear in molecular structure and have low molecular weight compared to polyethylene waxes. The most preferred wax is a Fischer-Tropsch-wax and from this type of waxes the most preferred is the "Paraflint PP Lube" Fischer-Tropsch-wax of "Schumann Sasol". The physical properties of the "Paraflint PP Lube" wax are as follows:

| **Property** | **Unit** | **Typical value** |
|---|---|---|
| Molecular mass | Daltons | 1300 |
| Density at 25°C | g/cm³ | 0.94 |
| Drop melting point | °C | 115 |
| Penetration at 25°C | 0.1 mm | 1 |
| Viscosity at 130°C | cP | 10 |
| Crystallinity | % | >90 |
| Surface energy | Dynes | 22 |

It is preferred that the amount of wax (C) is 0.1 to 20 wt.%, more preferred 2 to 10 wt.% and most preferred 3 to 6 wt.% on the total weight of the composition.

The last requirement for the inventive nanocomposite is that a compatibilizer (D) is used to reach a further improvement of the properties. The term "compatibilizer" means a chemical compound which is compatible with the chemical nature of the nanofiller on the one hand and with the chemical nature of the polyolefin on the other hand so that the dispersion of the nanofiller particles and/or the delamination of the layers of the nanofiller in the matrix polymer further is improved.

Usually, oligomers or polymers, having functional groups, are used as compatibilizers. The functional group provides an increase of intercalation of a layered material.

Preferably, the compatibilizer is a polymer, further preferably a polyolefin, comprising functional groups, and still further preferably comprises polar groups. Polar groups are defined as functional groups which comprise at least one element other than carbon and hydrogen.

Examples of such preferred compatibilizers are polyolefins which have been grafted preferably with maleic anhydrid or olefin copolymers which have been produced by polymerising an olefinic monomer with an olefinic comonomer comprising a functional/polar group. Such compatibilizers are commercially available e.g. as Polybond 3200. But also polyamides, polyesters and polyvinyl alcohols are suitable as a compatibilizer (D).

The most preferred compatibilizer (D) is maleic anhydride grafted polypropylene.

It is preferred that the amount of compatibilizer (D) is 0 to 20 wt.%, more preferred 2 to 15 wt.% and most preferred 3 to 8 wt.% based on the total weight of the composition.

It is preferred that the inventive composition achieves at least an oxygen permeation measured according to ASTM D3985 of at least less than 4400 cc/m²/24h, more preferred less than 4000 cc/m²/24h, and most preferred less than 3800 cc/m²/24h.

Additionally, it is preferred that the water vapour permeability is at least less than 2,8 g/m²/24h, more preferred less than 2,7 g/m²/24h and most preferred less than 2,5 g/m²/24h.

It is furthermore preferred that the flexural modulus measured according to ISO 178 is higher than 1800 MPa, more preferred higher than 1900 MPa and most preferred higher than 2000 MPa.

It is additionally preferred that a tensile modulus measured according to ISO 527-2 is higher than 1700 MPa, more preferred higher than 1800 MPa and most preferred higher than 2000 MPa.

The heat release rate (HRR (max)) is the most important cone calorimeter parameter for predicting fire hazard. A low value stands for good flame retardant properties. Therefore, it is preferred that the heat release rate of the nanocomposite is less than 1000 (max) kW/m², more preferred less than 950 (max) kW/m² and most preferred less than 900 (max) kW/m² measured according to ISO 5660-1V.

It is further preferred that the above-mentioned properties are simultaneously fulfilled by the inventive composition.

In addition to the components as mentioned, the nanocomposite may include conventional additives and fillers known in the art, such as flame retardants, foaming agents, reinforcing fillers, antioxidants, process stabilizers, antistatic agents, etc. Also the inventive composition may be blended with other polymers.

The nanocomposite preparation may be carried out by blending all components together, then charging them into an extruder and melt mixing the blend. The components may be preblended or fed as separated streams into the feeding hopper, where steams mix. An alternative method is to compound some of the components, e.g. nanofiller or/and wax with polymer to form a master batch. Master batch has a higher concentration of components than the final composition. Compatibliser may be added as master batch. For mixing, a conventional compounding or blend apparatus, e.g. a Banburry mixer, a 2-roil rubber mill, Buss-co-kneader or a twin screw extruder may be used.

It is in particular preferred that the master batch comprises a polymer matrix (A), a nano-filler (B), a wax (C) and a compatibilizer (D), as defined above, and is of 7 to 25 wt.-% present in the final composition.

A nanocomposite according to the present invention can be used in many diverse applications and products. The nanocomposite can for example be molded, extruded or otherwise formed into sheets, films, electrical appliances and automotive parts. Therefore, the nanocomposite is preferably used for the production of moulded and extruded articles.

The invention is also related to moulded and extruded articles, as for example sheets, films, electrical appliances and automotive parts, comprising the nanocomposite as defined above.

In the following the present invention is further illustrated by means of examples.

### Examples:

The nanocomposite was prepared in a Berstoff twin-screw laboratory extruder line with L/D 33 and 25 mm diameter. The melt temperature was 200°C. The propylene polymer, compatibilizer (MAH-maleic anhydride grafted polypropylene) and wax were premixed and fed into extruder. Nanofiller and additives were fed separately to the extruder.

Polypropylene polymer is a high crystalline propylene homopolymer, MFR₂ 8 (230°C/2, 16 Kg).

Organophilic montmorillonite grades:
Nanofiller 1: Alkyl quarternary ammonium montmorillonite
Nanofiller 2: Octadecylamine-treated montmorillonite

Wax used was Paraflint Enhance, A Fischer-Tropsch-wax from Shumann Sasol, with properties as specified above.

MFR, melt flow rate was determined according to ISO 1133, 230°C, 2,16 kg (for propylene polymer).

The flexural modulus was determined according to ISO 178.

The tensile modulus was determined according to ISO 527-2.

Impact properties were determined according to ISO 179.

The heat distortion temperature (HDT) was determined according to ISO 75.

Flame retardant properties were determined according to ISO 5660-1V.

Oxygen permeability was determined according to ASTM D 3985.
Moisture permeability was determined according to ASTM F 1249.

Tₘ, melting point as melting peak temperature, Tcr crystallisation temperature, crystallinity % and melting peak which were determined by DSC (differential scanning calorimenter) according to ISO 11357.

The rheological properties were measured with Rheometrics RDA-II controlled rotational rheometer (cone and plate geometry).

SHI shear thinning index (elasticity index) were calculated as viscosity ratio
- 0/50 being zero viscosity / viscosity at 5000 Pa and
- 3/50 being viscosity at 3000 Pa/viscosity at 5000 Pa

In the rheological curves eta = viscosity (Pa s) and G* = complex module (Pa)

Polydispersity index, PI, was calculated from the cross-over modulus.

The calculations are described in
- "Rheological characterisation of polyethylene fractions", Heino, E.L.; Lehtinen, A; Tanner, J; Seppälä, J. Neste Oy, Porvoo, Finland. "Theor. Appl. Rheol., Proc. Int. Congr. Rheol.", 11th (1992), 1 360-362; and
- "The influence of molecular structure on some rheological properties of polyethylene", Heino, Eeva-Leena. Borealis Polymers Oy, Porvoo, Finland: "Annual Transaction of the Nordic Rheology Society", 1995.

| Composition | comparative ex. 1 | Ex. 1 | Ex. 2 | comparative ex. 2 | Ex. 3 |
|---|---|---|---|---|---|
| Formulation | extruded HD120MO | 3% Paraflint enhance + 5%Nanofiller 1 | 2,5% Paraflint enhance + 5% Nanofiller1 + 3% Pbond3200 | 3% Pbond 3200 + 5% Nanofiller 2 | 3% Pbond 3200 + 5% Nanofiller 2 + 3% Paraflint enhance |
| MFR of compound | 9,9 | 11,5 | 7,6 | 9 | 8 |
| TS at yield (50mm/min), MPa | 3,2 | 33 | 36,7 | 34 | 36,4 |
| Elong. at yield (50mm/min),% | 11 | 7,2 | 7 | 8 | 6,6 |
| Flex.Mod., MPa | 1300 | 1820 | 2100 | 1800 | 2040 |
| Tensile Mod. MPa | 1350 | 1750 | 2020 | 1790 | 2070 |
| Charpy, notched 23 C | 5,5 | 3,6 | 2,7 | 2,8 | 3 |
| HDT/B (0,45 MPa) | 82,5 | 91,4 | 103 | 98 | 94,4 |
| | | | | | |
| Oygen permeation (25 micor)cc/m²/24 h, default is CF | 4703 | 3853 | 3123 | 4477 | 3045 |
| water vapour permeability, g/m2*24h, approx 120micron film thickness | 2,8 | 2,5 | 2 | 2,8 | 2,1 |
| Cast film appearance, roll temp. 30 C | good | better than 2085 | good | | better than 2118 |
| **DSC** | | | | | |
| Tm, °C | 163,6 | 163 | 162,4 | 162 | 163 |
| Tcr, °C | 114 | 118,6 | 116 | 118 | 121 |
| Crystallinity, % | 48 | 44/46 | 44/46 | 46/48,4 | 42/44 |
| Melting peak width | 10,5 | 9,2 | 8,9 | 8 | 9,6 |
| | | | | | |
| **Rheology** | | | | | |
| Zero viscosity, Pas | 2892 | 4003 | nonlinear | 3860 | 6158 |
| Viscosity (at 3000 Pa) Pa s | 1890 | 2100 | 4520 | 2730 | 3090 |
| Viscosity at 5000 Pa | 1650 | 1780 | 3500 | 2410 | 2660 |
| SHI(0/50) | 8 | 11 | nonlinear | 6,2 | 9,8 |
| SHI(3/50) | 5,5 | 5,8 | 7,3 | 4,4 | 4,9 |
| PI, 1/Pa | 3,9 | 3,8 | 4,0 | 3,2 | 3,3 |
| G, (2000Pa), Pa | 550 | 670 | 1150 | 480 | 590 |
| | | | | | |
| **Cone data** | | | | | |
| T_{ign}., S | 67 | 63 | 67 | 57 | 60 |
| T_{b}, S | 227 | 241 | 232 | 207 | 225 |
| HRR(max)kW/m2 | 1103 | 903 | 835 | 1004(high dev.) | 905 |
| HRR(ave), kW/m2 | 511 | 501 | 500 | 554 | 506 |
| SEA(ave), m2/kg | 557 | 679 | 635 | 581 | 659 |
| CO(ave), kg/kg | 0,0335 | 0,037 | 0,036 | 0,033 | 0,034 |
| CO2(ave), kg/kg | 2,78 | 2,72 | 2,7 | 2,7 | 2,64 |

## Claims

1. A nanocomposite comprising
(A) a polymer matrix,
(B) a nano-filler,
(C) a wax, and
(D) a compatibilizer.

2. Nanocomposite according to claim 1 **characterized in that** the wax added to the nanocomposite comprising polymer matrix (A), nanofiller (B) and compatibilizer (D) increases the viscosity of nanocomposite.

3. Nanocomposite according to claim 1 or 2 **characterized in, that** the polymer matrix (A) is thermoplastic.

4. Nanocomposite according to any one of the claims 1 to 3 **characterized in, that** the polymer matrix (A) is an olefin homo- and /or copolymer.

5. Nanocomposite according to any one of the preceding claims **characterized in, that** the polymer matrix (A) is selected from the group consisting of ethylene polymer and propylene polymer.

6. Nanocomposite according to any one of the preceding claims **characterized in, that** the polymer matrix (A) is a copolymer comprising at least two different components selected from the group consisting of ethylene, propylene, butene-1, heptene-1, hexen-1, 4-methylpentene.

7. Nanocomposite according to any one of the preceding claims **characterized in, that** the nano-filler (B) is a layered silicate material.

8. Nanocomposite according to any one of the preceding claims **characterized in, that** the amount of nano-filler (B) is 1 to 20 wt.% based on the total weight of the composition.

9. Nanocomposite according to any one of the preceding claims **characterized in, that** the wax (C) is synthetic wax.

10. Nanocomposite according to claim 9 **characterized in, that** the synthetic wax (C) is polar.

11. Nanocomposite according to any one of the preceding claims **characterized in, that** the wax (C) is a Fisher-Tropsch-wax.

12. Nanocomposite according to any one of the preceding claims **characterized in, that** the amount of wax (C) is 0.1 to 20 wt.% based on the total weight of the composition.

13. Nanocomposite according to any one of the preceding claims 2-12 **characterized in, that** the compatibilizer (D) is a polymer comprising polar groups.

14. Nanocomposite according to any one of the preceding claims **characterized in, that** the composition has an oxygen permeation ability of less than 4000 cm²/24h measured according ASTM D 3985.

15. Nanocomposite according to any one of the preceding claims **characterized in, that** the composition has a water vapor permeability of less than 2,8 g/m²/24h measured according to ASTM F 1249.

16. Nanocomposite according to any one of the preceding claims **characterized in, that** the composition has a heat release rate of less than 1000 (max) kW/m² measured according to ISO 5660-1V.

17. A master batch comprising a nanocomposite according to the claims 1 to 16, whereby this master batch is 7 to 25 wt.-% present in the final composition.

18. A process for producing a nanocomposite according to any one of the preceding claims **characterized in, that** the process comprises the steps of
a) blending the components together
b) charging them into an extruder and
c) melt mixing the blend.

19. A process according to claim 18 **characterized in that** a nanocomposite concentrate is produced containing 10 to 20 wt.-% polymer matrix (A) and this concentrate is then blended further with a polymer matrix (A).

20. Use of a nanocomposite according to any one of the preceding claims 1-17 in moulded or extruded articles.

21. Moulded or extruded articles comprising a nanocomposite according to any one of the preceding claims 1-17.

## Amended claims

### Amended claims in accordance with Rule 86(2) EPC.

**1.** A nanocomposite comprising
(A) a polymer matrix,
(B) a nano-filler,
(C) a wax, and
(D) a compatibilizer, **characterized in that** the amount of wax (C) is 2 to 10 wt% based on the total weight of the composition.

**2.** Nanocomposite according to claim 1 **characterized in that** the wax added to the nanocomposite comprising polymer matrix (A), nanofiller (B) and compatibilizer (D) increases the viscosity of nanocomposite.

**3.** Nanocomposite according to claim 1 or 2 **characterized in, that** the polymer matrix (A) is thermoplastic.

**4.** Nanocomposite according to any one of the claims 1 to 3 **characterized in, that** the polymer matrix (A) is an olefin homo- and /or copolymer.

**5.** Nanocomposite according to any one of the preceding claims **characterized in, that** the polymer matrix (A) is selected from the group consisting of ethylene polymer and propylene polymer.

**6.** Nanocomposite according to any one of the preceding claims **characterized in, that** the polymer matrix (A) is a copolymer comprising at least two different components selected from the group consisting of ethylene, propylene, butene-1, heptene-1, hexen-1, 4-methylpentene.

**7.** Nanocomposite according to any one of the preceding claims **characterized in, that** the nano-filler (B) is a layered silicate material.

**8.** Nanocomposite according to any one of the preceding claims **characterized in, that** the amount of nano-filler (B) is 1 to 20 wt.% based on the total weight of the composition.

**9.** Nanocomposite according to any one of the preceding claims **characterized in, that** the wax (C) is synthetic wax.

**10.** Nanocomposite according to claim 9 **characterized in, that** the synthetic wax (C) is polar.

**11.** Nanocomposite according to any one of the preceding claims **characterized in, that** the wax (C) is a Fisher-Tropsch-wax.

**12.** Nanocomposite according to any one of the preceding claims 2-11 **characterized in, that** the compatibilizer (D) is a polymer comprising polar groups.

**13.** Nanocomposite according to any one of the preceding claims **characterized in, that** the composition has an oxygen permeation ability of less than 4000 cm²/24h measured according ASTM D 3985.

**14.** Nanocomposite according to any one of the preceding claims **characterized in, that** the composition has a water vapor permeability of less than 2,8 g/m²/24h measured according to ASTM F 1249.

**15.** Nanocomposite according to any one of the preceding claims **characterized in, that** the composition has a heat release rate of less than 1000 (max) kW/m² measured according to ISO 5660-1V.

**16.** A master batch comprising a nanocomposite according to the claims 1 to 15, whereby this master batch is 7 to 25 wt.-% present in the final composition.

**17.** A process for producing a nanocomposite according to any one of the preceding claims **characterized in, that** the process comprises the steps of
a) blending the components according to claim 1 together
b) charging them into an extruder and
c) melt mixing the blend.

**18.** The process according to claim 17 **characterized in that** the components are preblended or fed as separated streams into the feeding hopper, where the streams are mixed.

**19.** A process according to claim 17 **characterized in that** a nanocomposite concentrate is produced containing 10 to 20 wt.-% polymer matrix (A) and this concentrate is then blended further with a polymer matrix (A).

**20.** Use of a nanocomposite according to any one of the preceding claims 1-16 in moulded or extruded articles.

**21.** Moulded or extruded articles comprising a nanocomposite according to any one of the preceding claims 1-16.
